# EUROPEAN PATENT APPLICATION

(11) **EP 4 171 087 A1**
(43) Date of publication of application: **26.04.2023**
(21) Application number: 21829967.5
(22) Date of filing: 16.04.2021
(51) Int. Cl.: H04W 12/00

(54) **DATA TRANSMISSION METHOD AND APPARATUS, STORAGE MEDIUM, CHIP, AND RELATED DEVICE**

(30) Priority: 23.06.2020 CN 202010581043
(71) Applicant: Spreadtrum Communications (Shanghai) Co., Ltd., Shanghai 201203 (CN)
(72) Inventor: LIU, Xing, Shanghai 201203 (CN)
(74) Representative: Mewburn Ellis LLP
(86) International application number: PCT/CN2021/087816
(87) International publication number: WO 2021/258826

(57) **Abstract**

Implementations of the disclosure discloses a method and an apparatus for data transmission, a storage medium, a chip, and a related device. The method includes: receiving a data packet, obtaining a packet data convergence protocol (PDCP) protocol data unit (PDU) by unpacking the data packet, performing duplicate packet detection on the PDCP PDU, and transmitting a non-duplicate data packet upon detecting that the data packet is the non-duplicate data packet. With the disclosure, the efficiency and the security of data transmission can be improved.

## Description

### TECHNICAL FIELD

The disclosure relates to the field of communication technology, and in particular, to a method and an apparatus for data transmission, a storage medium, a chip, and a related device.

### BACKGROUND

In existing data transmission technologies, a relay device (or referred to as relay) is introduced to forward data from a transmitting end to a receiving end, thereby expanding the data transmission range. In direct communication between user equipment (UE), if data is transmitted in a multicast manner, when the transmission range fails to reach a preset range, data forwarded through the relay device to a certain receiving end may be forwarded back to the relay device through which the data has passed, which causes repeated forwarding of the data. At present, most relay devices need to completely unpack a received data packet and restore the data packet to application-layer data to determine whether the data packet is a data packet that has been forwarded by the relay device before, which is of poor security, increases the complexity of parsing the data packet, and reduces the forwarding efficiency.

### SUMMARY

Implementations of the disclosure provide a method and an apparatus for data transmission, a storage medium, a chip, and a related device, with which the efficiency and the security of data transmission can be improved.

To solve the above technical problems, in a first aspect, implementations of the disclosure provide a method for data transmission. The method includes: receiving a data packet, obtaining a packet data convergence protocol (PDCP) protocol data unit (PDU) by unpacking the data packet, performing duplicate packet detection on the PDCP PDU, and transmitting a non-duplicate data packet upon detecting that the data packet is the non-duplicate data packet.

In a second aspect, implementations of the disclosure provide another method for data transmission. The method includes: transmitting a data packet to a relay device for duplicate packet detection, to transmit the data packet through the relay device to second user equipment (UE) upon detecting that the data packet is a non-duplicate data packet, where the duplicate packet detection performed by the relay device includes the duplicate packet detection performed by the relay device on a PDCP PDU, and the PDCP PDU is obtained by unpacking the data packet by the relay device.

In a third aspect, implementations of the disclosure provide a device for data transmission. The device includes a storage apparatus and a processor. The storage apparatus is configured to store program codes. The processor is configured to invoke the program codes to perform the method for data transmission described in the first aspect.

In a fourth aspect, implementations of the disclosure provide another device for data transmission. The device includes a storage apparatus and a processor. The storage apparatus is configured to store program codes. The processor is configured to invoke the program codes to perform the method for data transmission described in the second aspect.

In a fifth aspect, implementations of the disclosure provide an apparatus for data transmission. The apparatus includes a receiving module, an unpacking module, a detection module, and a transmitting module. The receiving module is configured to receive a data packet. The unpacking module is configured to obtain a PDCP PDU by unpacking the data packet. The detection module is configured to perform duplicate packet detection on the PDCP PDU. The transmitting module is configured to transmit a non-duplicate data packet upon detecting that the data packet is the non-duplicate data packet.

In a sixth aspect, implementations of the disclosure provide another apparatus for data transmission. The apparatus includes a transmitting module. The transmitting module is configured to transmit a data packet to a relay device for duplicate packet detection, to transmit the data packet through the relay device to a second UE upon detecting that the data packet is a non-duplicate data packet. The duplicate packet detection performed by the relay device includes the duplicate packet detection performed by the relay device on a PDCP PDU, and the PDCP PDU is obtained by unpacking the data packet by the relay device.

In a seventh aspect, implementations of the disclosure provide a computer-readable storage medium. The computer-readable storage medium stores computer programs which are operable with a computer to perform the method for data transmission described in the first aspect.

In an eighth aspect, implementations of the disclosure provide another computer-readable storage medium. The computer-readable storage medium stores computer programs which are operable with a computer to perform the method for data transmission described in the second aspect.

In a ninth aspect, implementations of the disclosure provide a chip. The chip is configured to: receive a data packet, obtain a PDCP PDU by unpacking the data packet, perform duplicate packet detection on the PDCP PDU, and output a non-duplicate data packet upon detecting that the data packet is the non-duplicate data packet.

In a tenth aspect, implementations of the disclosure further provide a chip. The chip is configured to: output a data packet to transmit the data packet to a relay device for duplicate packet detection, to transmit the data packet through the relay device to second UE upon detecting that the data packet is a non-duplicate data packet. The duplicate packet detection performed by the relay device includes the duplicate packet detection performed by the relay device on a PDCP PDU, and the PDCP PDU is obtained by unpacking the data packet by the relay device.

In an eleventh aspect, implementations of the disclosure provide a module device. The module device includes an input interface, an output interface, and a chip module. The input interface is configured to receive a data packet. The chip module is configured to: obtain a PDCP PDU by unpacking the data packet, and perform duplicate packet detection on the PDCP PDU. The output interface is configured to output a non-duplicate data packet upon detecting that the data packet is the non-duplicate data packet.

In a twelfth aspect, implementations of the disclosure further provide a module device. The module device includes an output interface. The output interface is configured to: output a data packet to transmit the data packet to a relay device for duplicate packet detection, to transmit the data packet through the relay device to second UE upon detecting that the data packet is a non-duplicate data packet. The duplicate packet detection performed by the relay device includes the duplicate packet detection performed by the relay device on a PDCP PDU, and the PDCP PDU is obtained by unpacking the data packet by the relay device.

Implementations of the disclosure have the following beneficial effect.

The relay device obtains the PDCP PDU by unpacking the received data packet, thereby avoiding decrypting the data packet, and performs duplicate packet detection on the PDCP PDU obtained through unpacking to forward a non-duplicate data packet to another device, thereby avoiding the data in the data packet from being easily obtained by a third party and repeated forwarding of the data packet due to thorough unpacking or decrypting of the data packet. In this way, the efficiency and the security of data transmission can be improved while expanding the data transmission range.

### BRIEF DESCRIPTION OF THE DRAWINGS

To describe technical solutions in implementations of the disclosure more clearly, the following briefly introduces the drawings required for description of implementations. Apparently, the drawings in the following description are merely some implementations of the disclosure. Those of ordinary skill in the art may also obtain other drawings based on these drawings without creative efforts.
FIG. 1 is a schematic structural diagram of a protocol stack of a relay device and user equipment (UE) provided in implementations of the disclosure.
FIG. 2 is a diagram illustrating a data transmission scenario provided in implementations of the disclosure.
FIG. 3 is a schematic flowchart of a method for data transmission provided in implementations of the disclosure.
FIG. 4 is a schematic diagram illustrating an interaction flow of a method for data transmission provided in implementations of the disclosure.
FIG. 5 is a schematic structural diagram of a device for data transmission provided in implementations of the disclosure.
FIG. 6 is a schematic structural diagram of an apparatus for data transmission provided in implementations of the disclosure.
FIG. 7 is a schematic structural diagram of another apparatus for data transmission provided in implementations of the disclosure.
FIG. 8 is a schematic structural diagram of a module device provided in implementations of the disclosure.
FIG. 9 is a schematic structural diagram of another module device provided in implementations of the disclosure.

### DETAILED DESCRIPTION

Technical solutions in implementations of the disclosure will be described clearly and completely below with reference to the drawings in implementations of the disclosure. Apparently, the described implementations are only a part of rather than all of implementations of the disclosure. Based on implementations of the disclosure, all other implementations obtained by those of ordinary skill in the art without creative efforts shall fall within the protection scope of the disclosure.

It should be noted that, in the specification, claims, and drawings of the disclosure, terms such as "first", "second", and "third" are intended to distinguish between similar objects, but do not necessarily indicate a specific order or sequence. It should be understood that the data used in such a way are interchangeable in proper circumstances, so that implementations of the disclosure described herein can be implemented in other sequences than the order illustrated or described herein. In addition, terms "comprising" and "including" and any variations thereof are intended to cover non-exclusive inclusions, for example, a process, method, system, product, or server including a series of steps or units is not necessarily limited to those clearly listed steps or units, but may include other steps or units that are not clearly listed or are inherent to these processes, methods, products, or devices.

For better understanding of a method for data transmission, a device, an apparatus, and a storage medium provided in implementations of the disclosure, terms involved in the disclosure are explained below.

### (1) Protocol stack of relay device

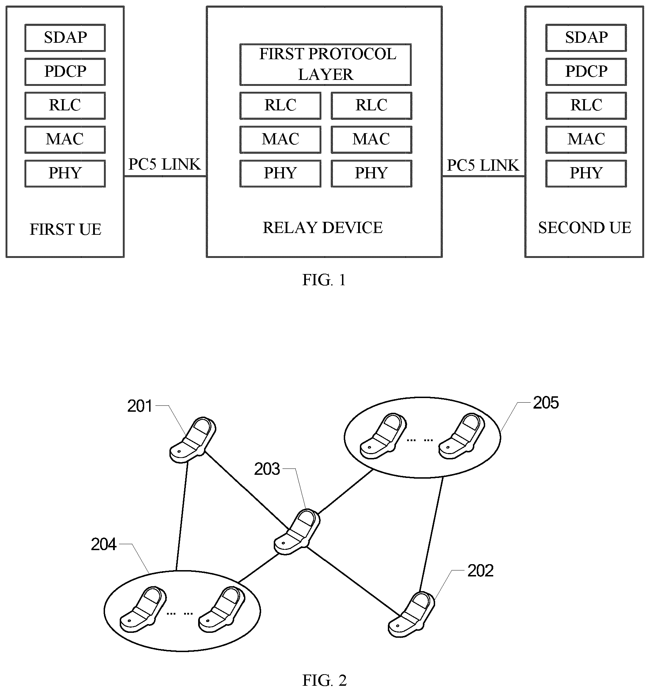

Referring to FIG. 1, FIG. 1 is a schematic structural diagram of a protocol stack of a relay device and user equipment (UE) provided in implementations of the disclosure. Specifically, as illustrated in FIG. 1, the protocol stack of the relay device includes a first protocol layer, a second protocol layer, a media access control (MAC) layer, and a physical (PHY) layer. The first protocol layer is above the second protocol layer in the protocol stack of the relay device. The first protocol layer is not equivalent to a packet data convergence protocol (PDCP) layer. The second protocol layer is a radio link control (RLC) layer. The PHY layer is configured for data transmission and for the relay device to receive and/or transmit data. The MAC layer is configured to multiplex different service data. The RLC layer is configured to segment and/or retransmit a data packet.

In implementations of the disclosure, the relay device has two sets of PHY layer, MAC layer, and RLC layer. As illustrated in FIG. 1, in the relay device, one set of PHY layer, MAC layer, and RLC layer on the left is configured to receive a data packet and unpack the received data packet, and one set of PHY layer, MAC layer, and RLC layer on the right is configured to pack data or a data packet stored in a transmit buffer of the relay device and transmit the packed data packet.

In implementations of the disclosure, the unpacking in the relay device refers to unpacking a received data packet until a PDCP protocol data unit (PDU) is restored, and then the unpacking ends. The unpacking in the relay device does not include decrypting the data packet.

The first protocol layer is configured to perform duplicate packet detection on a PDCP PDU obtained through unpacking, to determine whether the data packet received by the relay device is a non-duplicate data packet. A non-duplicate data packet refers to a data packet that the relay device has not received before, i.e., a data packet not repeatedly received. A duplicate data packet refers to a data packet that the relay device has received before.

### (2) Protocol stack of UE

Referring to FIG. 1, in FIG. 1, a first UE is a transmitting device, and a second UE is a receiving device. The first UE and the second UE each may include a PHY layer, a MAC layer, a RLC layer, a PDCP layer, and a service data adaptation protocol (SDAP) layer. The functions of the PHY layer, the MAC layer, and the RLC layer in the protocol stack of the UE are the same as or similar to the functions of the PHY layer, the MAC layer, and the RLC layer in the protocol stack of the relay device. The PDCP layer is configured for data sorting, data duplication detection, and data security protection. The SDAP layer is configured to map data streams to bearers.

In implementations of the disclosure, in the first UE, an upper-layer data packet of the first UE may be sequentially packed at the SDAP layer, the PDCP layer, the RLC layer, the MAC layer, and the PHY layer of the first UE to obtain a data packet to-be-transmitted. The PHY layer of the first UE transmits the data packet to-be-transmitted. For example, the data packet to-be-transmitted is forwarded by the relay device to the second UE, or directly transmitted to the second UE.

In implementations of the disclosure, in the second UE, a data packet received by the second UE, for example, a data packet transmitted by the relay device to the second UE or a data packet directly transmitted by the first UE to the second UE may be sequentially unpacked and/or decrypted at the PHY layer, the MAC layer, the RLC layer, the PDCP layer, and the SDAP layer of the second UE. Then, data obtained by the unpacking and/or decryption can be transmitted to an upper layer of the first UE. The upper-layer data packet of the UE refers to a data packet from an upper layer of the UE. The upper layer of the UE refers to a layer at least higher than the SDAP layer of the protocol stack of the UE, for example, an application layer of the UE.

It should be noted that, the disclosure is not limited to the direct communication between the first UE and the relay device via a PC5 interface and the direct communication between the second UE and the relay device via a PC5 interface in FIG. 1, the UE can also communicate with the relay device in FIG. 1 through multiple other relay devices, and the communication manner between the UE and the relay device is not limited herein.

Referring to FIG. 2, FIG. 2 is a diagram illustrating a data transmission scenario provided in implementations of the disclosure. As illustrated in FIG. 2, in this data transmission scenario, a first UE 201 serving as a transmitting device generates a data packet and transmits the data packet in a multicast manner. A second UE 202 is a receiving device in a target receiving group for the multicast of the first UE. When the second UE 202 is out of the range of multicast data transmission of the first UE 201, the first UE 201 can forward the data packet to the second UE 202 through a relay device 203. After receiving the data packet transmitted by the first UE 201, the relay device obtains a PDCP PDU by unpacking the data packet, performs duplicate packet detection on the PDCP PDU obtained through unpacking, and transmits the data packet to the second UE 202 upon detecting that the data packet is a non-duplicate data packet, or discards the data packet upon detecting that the data packet is a duplicate data packet.

In implementations of the disclosure, the first UE 201 transmits the data packet to the relay device 203 via a PC5 interface. The first UE 201 may transmit the data packet to the relay device 203 via the PC5 interface in two manners.

In the first manner, the first UE 201 communicates with the relay device 203 via a sidelink (SL). That is, the first UE 201 directly communicates with the relay device 203 via a PC5 interface, and the first UE 201 directly transmits the data packet to the relay device 203 via the PC5 interface between the first UE 201 and the relay device 203.

In the second manner, the first UE 201 forwards the data packet to the relay device 203 through a first relay device system 204. The first relay device system 204 includes at least one relay device. The first relay device system 204 includes a relay device with the same protocol stack structure as the relay device 203 and/or a relay device with a protocol stack structure different from the relay device 203. The relay devices in the first relay device system 204 can directly communicate with one another via a PC5 interface. The first UE 201 can directly communicate with the first relay device system 204 via a PC5 interface. That is, the first UE 201 can directly communicate with the relay device in the first relay device system 204 via a PC5 interface. The relay device 203 can directly communicate with the first relay device system 204 via a PC5 interface. That is, the relay device 203 can directly communicate with the relay device in the first relay device system 204 via a PC5 interface. The first UE 201 transmits the data packet to the first relay device system 204 via the PC5 interface between the first UE 201 and the first relay device system 204. Then, the first relay device system 204 transmits the data packet to the relay device 203 via the PC5 interface between the first relay device system 204 and the relay device 203. After the first relay device system 204 receives the data packet transmitted by the first UE 201, the data packet is transmitted between the relay devices in the first relay device system 204 via the PC5 interface between the relay devices. If the protocol stack of the relay device in the first relay device system 204 has the same structure as the protocol stack of the relay device 203, after receiving the data packet, the relay device in the first relay device system 204 can perform the same unpacking and duplicate packet detection operations as the relay device 203.

In implementations of the disclosure, the relay device 203 may transmit a non-duplicate data packet to the second UE 202 via a PC5 interface. The relay device 203 may transmit the non-duplicate data packet to the second UE 202 via the PC5 interface in two manners.

In the first manner, the relay device 203 communicates with the second UE 202 via a SL. That is, the relay device 203 communicates with the second UE 202 via a PC5 interface, and the relay device 203 directly transmits the non-duplicate data packet to the second UE 202 via the PC5 interface between the relay device 203 and the second UE 202.

In the second manner, the relay device transmits the non-duplicate data packet to the second UE 202 through a second relay system 205. The second relay device system 205 includes at least one relay device. The second relay device system 205 includes a relay device with the same protocol stack structure as the relay device 203 and/or a relay device with a protocol stack structure different from the relay device 203. The relay devices in the second relay device system 205 can directly communicate with one another via a PC5 interface. The second UE 202 can directly communicate with the second relay device system 205 via a PC5 interface. That is, the second UE 202 can directly communicate with the relay device in the second relay device system 205 via a PC5 interface. The relay device 203 can directly communicate with the second relay device system 205 via the PC5 interface. That is, the relay device 203 can directly communicate with the relay device in the second relay device system 205 via a PC5 interface. The relay device 203 transmits the data packet to the second relay device system 205 via the PC5 interface between the relay device 203 and the second relay device system 205. Then, the second relay device system 205 transmits the data packet to the second UE 202 via the PC5 interface between the second relay device system 205 and the second UE 202. After the second relay device system 205 receives the data packet transmitted by the relay device 203, the data packet is transmitted between the relay devices in the second relay device system 205 via the PC5 interface between the relay devices. If the protocol stack of the relay device in the second relay device system 205 has the same structure as the protocol stack of the relay device 203, after receiving the data packet, the relay device in the second relay device system 205 can perform the same unpacking and duplicate packet detection operations as the relay device 203. The PC5 interface is a direct interface between UEs, a direct interface between a UE and a relay device, or a direct interface between relay devices.

In implementations of the disclosure, the relay device may be a normal relay device, such as a relay, etc., or a normal terminal (or UE) which is responsible for relaying service data. Such a terminal is referred to as a relay UE, that is, the relay device is a relay UE.

It should be noted that, the first UE 201 is not limited to the first UE illustrated in FIG. 2 and may also include more UE. The second UE 202 is not limited to the second UE illustrated in FIG. 2 and may also include more UE. The first UE 201 may transmit the data packet to the relay device 203 or the first relay device system 204 in a multicast manner. The relay device in the first relay device system 204 may transmit the data packet to the relay device 203 in a multicast manner. The data packet may also be transmitted between the relay devices in the first relay device system 204 in a multicast manner. The relay device 203 may transmit the non-duplicate data packet to the second UE 202 or the second relay device system 205 in a multicast manner. The relay device in the second relay device system 205 may transmit the data packet to the second UE 202 in a multicast manner. The data packet may also be transmitted in the second relay device system 205 in a multicast manner.

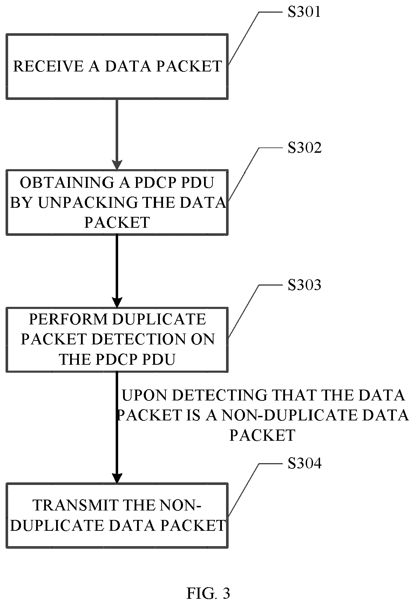

Referring to FIG. 3, FIG. 3 is a schematic flowchart of a method for data transmission provided in implementations of the disclosure. Although operational steps of the method described in implementations or flowcharts are provided in this specification, more or fewer operational steps may be included based on conventional efforts or non-creative efforts. The order of the steps listed in implementations is merely one of multiple step execution orders, and does not indicate the only execution order. When the method is performed in an actual terminal or storage medium product, the method may be performed according to method orders illustrated in implementations or the accompanying drawings or performed in parallel. Specifically, as illustrated in FIG. 3, the method is applied to a relay device and includes the following.

S301: Receive a data packet.

S302: Obtain a PDCP PDU by unpacking the data packet.

In implementations of the disclosure, the data packet is unpacked but not decrypted. Specifically, the data packet is unpacked until the PDCP PDU is restored, and then the unpacking ends, thereby ensuring the security of information in the data packet.

S303: Perform duplicate packet detection on the PDCP PDU.

A non-duplicate data packet refers to a data packet that the relay device has not received before, i.e., a data packet not repeatedly received. A duplicate data packet refers to a data packet that the relay device has received before.

The method proceeds to S304 upon detecting that the data packet is a non-duplicate data packet.

S304: Transmit the non-duplicate data packet.

In implementations of the disclosure, the relay device obtains the PDCP PDU by unpacking the received data packet, thereby avoiding decrypting the data packet, and performs duplicate packet detection on the PDCP PDU obtained through unpacking to forward a non-duplicate data packet to another device, thereby avoiding the data in the data packet from being easily obtained by a third party and repeated forwarding of the data packet due to thorough unpacking or decrypting of the data packet. In this way, the efficiency and the security of data transmission can be improved while expanding the data transmission range.

Correspondingly, implementations of the disclosure further provide a method for data transmission. The method is applied to a first UE and includes the following.

S41: Transmit a data packet to a relay device for duplicate packet detection, to transmit the data packet through the relay device to a second UE upon detecting that the data packet is a non-duplicate data packet.

The duplicate packet detection performed by the relay device includes the duplicate packet detection performed by the relay device on a PDCP PDU, and the PDCP PDU is obtained by unpacking the data packet by the relay device.

In implementations of the disclosure, the first UE transmits the data packet to the relay device, and the relay device obtains the PDCP PDU by unpacking the data packet, thereby avoiding decrypting the data packet, and performs duplicate packet detection on the PDCP PDU obtained through unpacking to forward a non-duplicate data packet to another device, thereby avoiding the data in the data packet from being easily obtained by a third party and repeated forwarding of the data packet due to thorough unpacking or decrypting of the data packet. In this way, the efficiency and the security of data transmission can be improved while expanding the data transmission range.

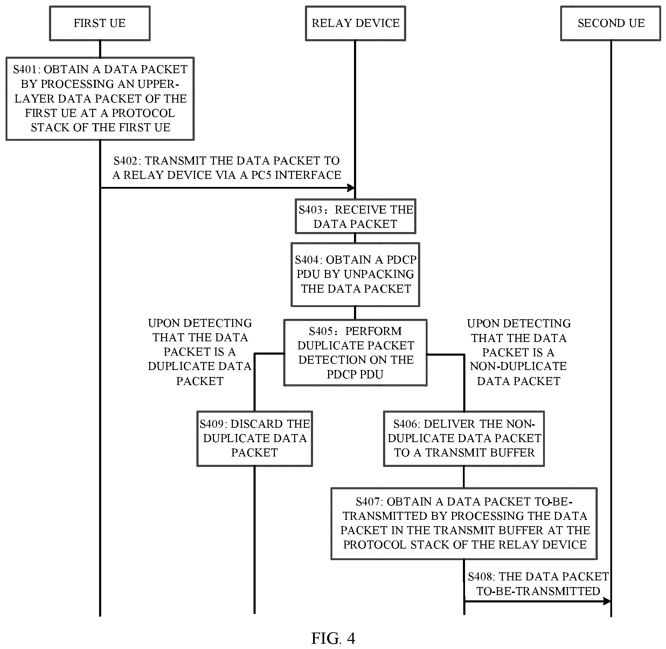

Referring to FIG. 4, FIG. 4 is a schematic diagram illustrating an interaction flow of a method for data transmission provided in implementations of the disclosure. Although operational steps of the method described in implementations or flowcharts are provided in this specification, more or fewer operational steps may be included based on conventional efforts or non-creative efforts. The order of the steps listed in implementations is merely one of multiple step execution orders, and does not indicate the only execution order. When the method is performed in an actual terminal or storage medium product, the method may be performed according to method orders illustrated in implementations or the accompanying drawings or performed in parallel. Specifically, as illustrated in FIG. 4, the method includes the following.

S401: A first UE obtains a data packet by processing an upper-layer data packet of the first UE at a protocol stack of the first UE.

The upper-layer data packet of the first UE refers to a data packet from an upper layer of the first UE. The upper layer of the first UE refers to a layer at least higher than the SDAP layer of the protocol stack of the first UE, for example, an application layer of the first UE.

The upper-layer data packet of the first UE may be processed at the protocol stack of the first UE as follows. The upper-layer data packet of the first UE is packed at the protocol stack of the first UE to obtain a first data packet packed.

The protocol stack of the first UE may include a PHY layer, a MAC layer, a RLC layer, a PDCP layer, and a SDAP layer.

The upper-layer data packet of the first UE may be packed at the protocol stack of the first UE as follows. The upper-layer data packet of the first UE is sequentially packed at the SDAP layer, the PDCP layer, the RLC layer, the MAC layer, and the PHY layer to obtain the first data packet packed.

S402: The first UE transmits the data packet to a relay device via a PC5 interface.

In implementations of the disclosure, the first UE may directly transmit the first data packet to the relay device via a PC5 interface between the first UE and the relay device. The first UE may also forward the first data packet to the relay device through the first relay device system. For the first relay device system, reference can be made to the description with reference to FIG. 2, which will not be repeated herein.

In implementations of the disclosure, before the first UE transmits the first data packet to the relay device, the PDCP layer (a PDCP entity) in the protocol stack of the first UE assigns a sequence number (SN) for the first data packet, and record the SN in the first data packet, specifically, in the header of the first data packet. That is, the first data packet transmitted by the first UE to the relay device via the PC5 interface carries the SN. The SN is used to distinguish different PDUs.

S403: The relay device receives the data packet.

In implementations of the disclosure, the relay device receives the first data packet transmitted by the first UE via a PC5 interface. The relay device may directly receive the first data packet via a PC5 interface between the relay device and the first UE. The relay device may also receive the first data packet forwarded by the first relay device system. The first relay device system (or the relay device therein) can unpack the received first data packet to obtain a second data packet, perform duplicate packet detection on the second data packet, and pack the second data packet to obtain the first data packet again. The second data packet may be a PDCP PDU.

S404: The relay device obtains a PDCP PDU by unpacking the data packet.

In implementations of the disclosure, the relay device unpacks but does not decrypt the received first data packet. Specifically, the relay device unpacks the first data packet until the PDCP PDU is restored, and then the unpacking ends, thereby ensuring the security of information in the first data packet.

In implementations of the disclosure, the relay device obtains the PDCP PDU by unpacking the received first data packet at a PHY layer, a MAC layer, and a RLC layer in a protocol stack of the relay device.

S405: The relay device performs duplicate packet detection on the PDCP PDU.

In implementations of the disclosure, the relay device performs the duplicate packet detection on the received first data packet by performing the duplicate packet detection on the PDCP PDU.

In implementations of the disclosure, the first data packet carries a SN (of the first data packet) assigned by the PDCP layer in the protocol stack of the first UE.

The duplicate packet detection is performed on the PDCP PDU as follows. The relay device performs the duplicate packet detection on the PDCP PDU according to the SN assigned by the PDCP layer in the protocol stack of the first UE.

In implementations of the disclosure, the protocol stack of the relay device includes a first protocol layer. The first protocol layer is above a second protocol layer in the protocol stack. The second protocol layer is a RLC layer. The duplicate packet detection is performed on the PDCP PDU as follows. The relay device performs the duplicate packet detection on the PDCP PDU at the first protocol layer.

In implementations of the disclosure, the duplicate packet detection is performed at the first protocol layer of the relay device on the PDCP PDU according to the SN assigned by the PDCP layer in the protocol stack of the first UE.

The method proceeds to S406 upon detecting that the data packet is a non-duplicate data packet, that is, the first data packet received by the relay device is a non-duplicate data packet.

The method proceeds to S409 upon detecting that the data packet is a duplicate data packet, that is, the first data packet received by the relay device is a duplicate data packet.

S406: The relay device delivers the non-duplicate data packet to a transmit buffer.

The transmit buffer refers to a transmit buffer of the relay device. The relay device delivers the non-duplicate data packet to the transmit buffer as follows. The relay device delivers the PDCP PDU obtained by unpacking the non-duplicate data packet to the transmit buffer.

S407: The relay device obtains a data packet to-be-transmitted by processing the data packet in the transmit buffer at the protocol stack of the relay device.

The data packet in the transmit buffer is the non-duplicate data packet.

The relay device obtains the data packet to-be-transmitted by processing the data packet in the transmit buffer at the protocol stack of the relay device as follows. The relay device obtains a first data packet to-be-transmitted by packing the data packet in the transmit buffer at the protocol stack of the relay device.

The data packet in the transmit buffer is packed at the protocol stack of the relay device as follows. The data packet in the transmit buffer is packed at the RLC layer, the MAC layer, and the PHY layer of the protocol stack of the relay device.

S408: The relay device transmits the data packet to-be-transmitted.

In implementations of the disclosure, the relay device transmits the first data packet obtained at S407. That is, the relay device transmits the non-duplicate data packet. The relay device transmits the non-duplicate data packet to a second UE via a PC5 interface. The relay device may directly transmit the first data packet to the second UE via a PC5 interface between the relay device and the second UE. The relay device may also forward the first data packet to the second UE through the second relay device system. For the second relay device system, reference can be made to the description with reference to FIG. 2, which will not be repeated herein.

S409: The relay device discards the duplicate data packet.

In implementations of the disclosure, the relay device discards the first data packet upon detecting that the first data packet is a duplicate data packet.

In implementations of the disclosure, the first UE transmits the data packet to the relay device, thereby avoiding decrypting the data packet, obtains the PDCP PDU by unpacking the data packet, and performs duplicate packet detection on the PDCP PDU obtained through unpacking to forward a non-duplicate data packet to another device, thereby avoiding the data in the data packet from being easily obtained by a third party and repeated forwarding of the data packet due to thorough unpacking or decrypting of the data packet. In this way, the efficiency and the security of data transmission can be improved while expanding the data transmission range.

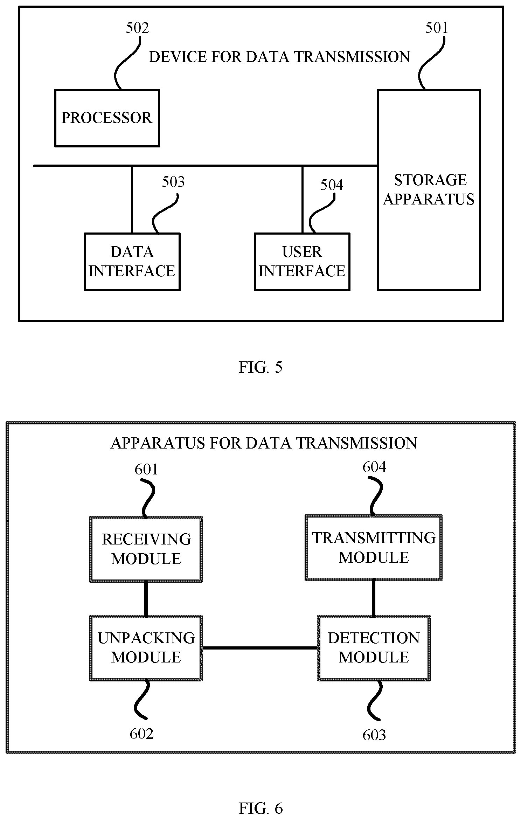

Referring to FIG. 5, FIG. 5 is a schematic structural diagram of a device for data transmission provided in implementations of the disclosure. Specifically, as illustrated in FIG. 5, the device for data transmission includes a storage apparatus 501 and a processor 502, and may further include a data interface 503 and a user interface 504. Various hardware may be connected via various types of buses.

The device for data transmission can exchange data with other devices such as terminals and servers via the data interface 503. The user interface 504 is configured to achieve human-computer interaction between the user and the device. The user interface 504 may provide a touch display screen, a physical button, and the like to achieve human-computer interaction between the user and the device for data transmission.

The storage apparatus 501 may include a volatile memory, such as a random-access memory (RAM). The storage apparatus 501 may also include a non-volatile memory, such as a flash memory, a solid-state drive (SSD), etc. The storage apparatus 501 may also include a combination of the above memories.

The processor 502 may be a central processing unit (CPU). The processor 502 may further include a hardware chip. The hardware chip may be an application-specific integrated circuit (ASIC), a programmable logic device (PLD), and the like. The PLD may be a field-programmable gate array (FPGA), a generic array logic (GAL), and the like.

For the case where the device for data transmission is a relay device. The storage apparatus 501 is configured to store program codes. The processor 502 is configured to invoke the program codes to: receive a data packet, obtain a PDCP PDU by unpacking the data packet, perform duplicate packet detection on the PDCP PDU, and transmit a non-duplicate data packet upon detecting that the data packet is the non-duplicate data packet.

In implementations, the processor 502 is specifically configured to: receive the data packet transmitted by a first UE via a PC5 interface.

In implementations, the processor 502 is specifically configured to: perform the duplicate packet detection on the PDCP PDU according to a SN assigned by a PDCP layer in a protocol stack of the first UE.

In implementations, a protocol stack of a relay device includes a first protocol layer, and the processor 502 is specifically configured to: perform, at the first protocol layer, the duplicate packet detection on the PDCP PDU.

In implementations, before transmitting the non-duplicate data packet, the processor 502 is further configured to: deliver the non-duplicate data packet to a transmit buffer.

In implementations, the processor 502 is specifically configured to: obtain a data packet to-be-transmitted by processing the data packet in the transmit buffer at the protocol stack of the relay device, and transmit the data packet to-be-transmitted.

In implementations, the processor 502 is specifically configured to: transmit the non-duplicate data packet to a second UE via a PC5 interface.

In implementations, the first protocol layer is above a second protocol layer in the protocol stack, and the second protocol layer is a RLC layer.

In implementations, the processor 502 is further configured to: discard a duplicate data packet upon detecting that the data packet is the duplicate data packet.

For the case where the device for data transmission is a first UE. The storage apparatus 501 is configured to store program codes. The processor 502 is configured to invoke the program codes to: transmit a data packet to a relay device for duplicate packet detection, to transmit the data packet through the relay device to a second UE upon detecting that the data packet is a non-duplicate data packet. The duplicate packet detection performed by the relay device includes the duplicate packet detection performed by the relay device on a PDCP PDU, and the PDCP PDU is obtained by unpacking the data packet by the relay device.

In implementations, before transmitting the data packet to the relay device for the duplicate packet detection, the processor 502 is further configured to: obtain the data packet by processing an upper-layer data packet of a first UE at a protocol stack of the first UE.

In implementations, the processor 502 is specifically configured to: transmit the data packet to the relay device via a PC5 interface.

Referring to FIG. 6, FIG. 6 is a schematic structural diagram of an apparatus for data transmission provided in implementations of the disclosure. Specifically, as illustrated in FIG. 6, the apparatus for data transmission includes a receiving module 601, an unpacking module 602, a detection module 603, and a transmitting module 604. The receiving module 601 is configured to receive a data packet. The unpacking module 602 is configured to obtain a PDCP PDU by unpacking the data packet. The detection module 603 is configured to perform duplicate packet detection on the PDCP PDU. The transmitting module 604 is configured to transmit a non-duplicate data packet upon detecting that the data packet is the non-duplicate data packet.

In implementations, the receiving module 601 is specifically configured to: receive the data packet transmitted by a first UE via a PC5 interface.

In implementations, the detection module 603 is specifically configured to: perform the duplicate packet detection on the PDCP PDU according to a SN assigned by a PDCP layer in a protocol stack of the first UE.

In implementations, a protocol stack of a relay device includes a first protocol layer, and the detection module 603 is specifically configured to: perform, at the first protocol layer, the duplicate packet detection on the PDCP PDU.

In implementations, before transmitting the non-duplicate data packet, the transmitting module 604 is further configured to: deliver the non-duplicate data packet to a transmit buffer.

In implementations, the transmitting module 604 is specifically configured to: obtain a data packet to-be-transmitted by processing the data packet in the transmit buffer at the protocol stack of the relay device, and transmit the data packet to-be-transmitted.

In implementations, the transmitting module 604 is specifically configured to: transmit the non-duplicate data packet to a second UE via a PC5 interface.

In implementations, the first protocol layer is above a second protocol layer in the protocol stack, and the second protocol layer is a RLC layer.

In implementations, the detection module 603 is further configured to: discard a duplicate data packet upon detecting that the data packet is the duplicate data packet.

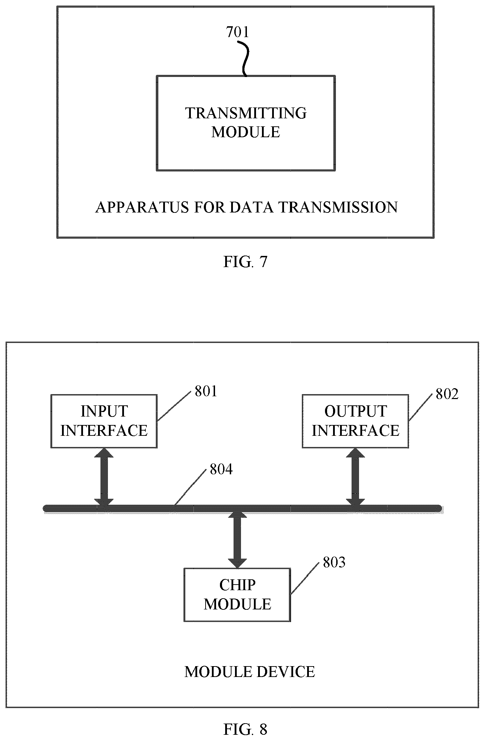

Referring to FIG. 7, FIG. 7 is a schematic structural diagram of another apparatus for data transmission provided in implementations of the disclosure. Specifically, as illustrated in FIG. 7, the apparatus for data transmission includes a transmitting module 701. The transmitting module 701 is configured to: transmit a data packet to a relay device for duplicate packet detection, to transmit the data packet through the relay device to a second UE upon detecting that the data packet is a non-duplicate data packet. The duplicate packet detection performed by the relay device includes the duplicate packet detection performed by the relay device on a PDCP PDU, and the PDCP PDU is obtained by unpacking the data packet by the relay device.

In implementations, before transmitting the data packet to the relay device for the duplicate packet detection, the transmitting module 701 is further configured to: obtain the data packet by processing an upper-layer data packet of a first UE at a protocol stack of the first UE.

In implementations, the transmitting module 701 is specifically configured to: transmit the data packet to the relay device via a PC5 interface.

Correspondingly, implementations of the disclosure further provide a computer-readable storage medium. The computer-readable storage medium stores computer programs which are operable with a computer to perform the method described in any implementation in FIG. 3 (S301 to S304) and FIG. 4 (S403 to S409) of the disclosure. It can be understood that the computer storage medium herein may include a built-in storage medium in the smart terminal, and also an extended storage medium supported by the smart terminal. The computer storage medium provides storage space, and the storage space stores the operating system of the smart terminal. In addition, one or more instructions suitable for being loaded and executed by the processor are also stored in the storage space, and these instructions may be one or more computer programs (including program codes). It should be noted that, the computer storage medium herein may be a high-speed RAM, or a non-volatile memory, such as at least one disk memory. Optionally, the computer storage medium may also be at least one computer storage medium located remotely from the above processor.

Correspondingly, implementations of the disclosure further provide another computer-readable storage medium. The computer-readable storage medium stores computer programs which are operable with a computer to perform S41 and the method described in any implementation in FIG. 4 (S401 to S402) of the disclosure. It can be understood that the computer storage medium herein may include a built-in storage medium in the smart terminal, and also an extended storage medium supported by the smart terminal. The computer storage medium provides storage space, and the storage space stores the operating system of the smart terminal. In addition, one or more instructions suitable for being loaded and executed by the processor are also stored in the storage space, and these instructions may be one or more computer programs (including program codes). It should be noted that, the computer storage medium herein may be a high-speed RAM, or a non-volatile memory, such as at least one disk memory. Optionally, the computer storage medium may also be at least one computer storage medium located remotely from the above processor.

Correspondingly, implementations of the disclosure provide a chip. The chip is configured to: receive a data packet, obtain a PDCP PDU by unpacking the data packet, perform duplicate packet detection on the PDCP PDU, and output a non-duplicate data packet upon detecting that the data packet is the non-duplicate data packet.

In implementations, the chip is specifically configured to: receive the data packet transmitted by a first UE via a PC5 interface.

In implementations, the chip is specifically configured to: perform the duplicate packet detection on the PDCP PDU according to a SN assigned by a PDCP layer in a protocol stack of the first UE.

In implementations, a protocol stack of a relay device includes a first protocol layer, and the chip is specifically configured to: perform, at the first protocol layer, the duplicate packet detection on the PDCP PDU.

In implementations, the chip is further configured to: before transmitting the non-duplicate data packet, deliver the non-duplicate data packet to a transmit buffer.

In implementations, the chip is specifically configured to: obtain a data packet to-be-transmitted by processing the data packet in the transmit buffer at the protocol stack of the relay device, and output the data packet to-be-transmitted.

In implementations, the chip is specifically configured to: output the non-duplicate data packet to transmit the non-duplicate data packet to the second UE via a PC5 interface.

In implementations, the first protocol layer is above a second protocol layer in the protocol stack, and the second protocol layer is a RLC layer.

In implementations, the chip is further configured to: discard a duplicate data packet upon detecting that the data packet is the duplicate data packet.

It should be noted that, the chip can perform the relevant steps of the relay device in above method implementations in FIGs. 3 and 4. For details, reference can be made to implementations provided in the above steps, which will not be repeated herein.

In implementations, the chip includes at least one processor, at least one first memory, and at least one second memory. The at least one first memory and the at least one processor are interconnected through lines. The first memory stores instructions. The at least one second memory and the at least one processor are interconnected through lines. The second memory stores data that needs to be stored for above method implementations.

For apparatuses or products applied to or integrated in the chip, modules contained therein may be implemented by hardware such as circuits, or at least some of the modules may be implemented by software programs running on a processor integrated in the chip, and the remaining modules (if any) can be implemented by hardware such as circuits.

Correspondingly, implementations of the disclosure further provide a chip. The chip is configured to: output a data packet to transmit the data packet to a relay device for duplicate packet detection, to transmit the data packet through the relay device to a second UE upon detecting that the data packet is a non-duplicate data packet. The duplicate packet detection performed by the relay device includes the duplicate packet detection performed by the relay device on a PDCP PDU, and the PDCP PDU is obtained by unpacking the data packet by the relay device.

In implementations, the chip is further configured to: before transmitting the data packet to the relay device for the duplicate packet detection, obtain the data packet by processing an upper-layer data packet of a first UE at a protocol stack of the first UE.

In implementations, the chip is specifically configured to: output the data packet to transmit the data packet to the relay device via a PC5 interface.

It should be noted that, the chip can perform the relevant steps of the first UE in the above method implementations in FIG. 4. For details, reference can be made to implementations provided in the above steps, which will not be repeated herein.

In implementations, the chip includes at least one processor, at least one first memory, and at least one second memory. The at least one first memory and the at least one processor are interconnected through lines. The first memory stores instructions. The at least one second memory and the at least one processor are interconnected through lines. The second memory stores data that needs to be stored for above method implementations.

For apparatuses or products applied to or integrated in the chip, modules contained therein may be implemented by hardware such as circuits, or at least some of the modules may be implemented by software programs running on a processor integrated in the chip, and the remaining modules (if any) can be implemented by hardware such as circuits.

Referring to FIG. 8, FIG. 8 is a schematic structural diagram of a module device provided in implementations of the disclosure. The module device includes an input interface 801, an output interface 802, and a chip module 803. The input interface 801 is configured to receive a data packet. The chip module 803 is configured to: obtain a PDCP PDU by unpacking the data packet, and perform duplicate packet detection on the PDCP PDU.

The output interface 802 is configured to output a non-duplicate data packet upon detecting that the data packet is the non-duplicate data packet.

In implementations, the input interface 801 is specifically configured to: receive the data packet transmitted by a first UE via a PC5 interface.

In implementations, the chip module 803 is specifically configured to: perform the duplicate packet detection on the PDCP PDU according to a SN assigned by a PDCP layer in a protocol stack of the first UE.

In implementations, a protocol stack of a relay device includes a first protocol layer, and the chip module 803 is specifically configured to: perform, at the first protocol layer, the duplicate packet detection on the PDCP PDU.

In implementations, the chip module 803 is further configured to: before transmitting the non-duplicate data packet, deliver the non-duplicate data packet to a transmit buffer.

In implementations, the chip module 803 is specifically configured to: obtain a data packet to-be-transmitted by processing the data packet in the transmit buffer at the protocol stack of the relay device. The output interface 802 is specifically configured to: output the data packet to-be-transmitted.

In implementations, the output interface 802 is specifically configured to: output the non-duplicate data packet to transmit the non-duplicate data packet to the second UE via a PC5 interface.

In implementations, the first protocol layer is above a second protocol layer in the protocol stack, and the second protocol layer is a RLC layer.

In implementations, the chip module 803 is further configured to: discard a duplicate data packet upon detecting that the data packet is the duplicate data packet.

In implementations of the disclosure, the input interface 801 and the output interface 802 may be communication interfaces independent from each other, or may be the same communication interface. The connection medium between the input interface 801, the chip module 803, and the output interface 802 is not limited herein. In implementations of the disclosure, in FIG. 8, the input interface 801, the chip module 803, and the output interface 802 are connected via a bus 804. The bus is represented by a thick line in FIG. 8. The connection between other components is only for illustration rather than limitation. The bus 804 can be classified into address bus, data bus, control bus, etc. For ease of representation, only one thick line is illustrated in FIG. 8, which does not mean that there is only one bus or one type of bus.

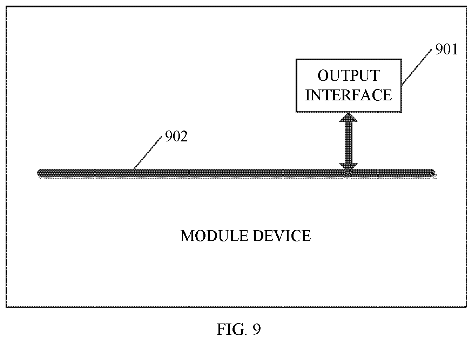

Referring to FIG. 9, FIG. 9 is a schematic structural diagram of another module device provided in implementations of the disclosure. The module device includes an output interface 901. The output interface 901 is configured to: output a data packet to transmit the data packet to a relay device for duplicate packet detection, to transmit the data packet through the relay device to a second UE upon detecting that the data packet is a non-duplicate data packet. The duplicate packet detection performed by the relay device includes the duplicate packet detection performed by the relay device on a PDCP PDU, and the PDCP PDU is obtained by unpacking the data packet by the relay device.

In implementations, the module device further includes a chip module. The chip module is configured to: before transmitting the data packet to the relay device for the duplicate packet detection, obtain the data packet by processing an upper-layer data packet of a first UE at a protocol stack of the first UE.

In implementations, the output interface 901 is specifically configured to: output the data packet to transmit the data packet to the relay device via a PC5 interface.

In implementations of the disclosure, the connection medium between the output interface 901 and the chip module (not illustrated in FIG. 9) is not limited herein. In implementations of the disclosure, in FIG. 9, the output interface 901 and the chip module are connected via a bus 902. The bus is represented by a thick line in FIG. 9. The connection between other components is only for illustration rather than limitation. The bus 902 can be classified into address bus, data bus, control bus, etc. For ease of representation, only one thick line is illustrated in FIG. 9, which does not mean that there is only one bus or one type of bus.

What is disclosed above is merely some implementations of the disclosure, and cannot limit the scope of the disclosure. Those of ordinary skill in the art can understand all or part of the process of implementing the above implementations The equivalent changes made according to the claims of the disclosure shall fall within the scope of the disclosure.

## Claims

1. A method for data transmission, comprising:
receiving a data packet;
obtaining a packet data convergence protocol (PDCP) protocol data unit (PDU) by unpacking the data packet;
performing duplicate packet detection on the PDCP PDU; and
transmitting a non-duplicate data packet upon detecting that the data packet is the non-duplicate data packet.

2. The method of claim 1, wherein receiving the data packet comprises:
receiving the data packet transmitted by first user equipment (UE) via a PC5 interface.

3. The method of claim 2, wherein performing the duplicate packet detection on the PDCP PDU comprises:
performing the duplicate packet detection on the PDCP PDU according to a sequence number (SN) assigned by a PDCP layer in a protocol stack of the first UE.

4. The method of claim 1, wherein a protocol stack of a relay device comprises a first protocol layer, and
performing the duplicate packet detection on the PDCP PDU comprises:
performing, at the first protocol layer, the duplicate packet detection on the PDCP PDU.

5. The method of claim 1, wherein before transmitting the non-duplicate data packet, the method further comprises:
delivering the non-duplicate data packet to a transmit buffer.

6. The method of claim 5, wherein transmitting the non-duplicate data packet comprises:
obtaining a data packet to-be-transmitted by processing the data packet in the transmit buffer at the protocol stack of the relay device; and
transmitting the data packet to-be-transmitted.

7. The method of claim 1, wherein transmitting the non-duplicate data packet comprises:
transmitting the non-duplicate data packet to a second UE via a PC5 interface.

8. The method of claim 4, wherein the first protocol layer is above a second protocol layer in the protocol stack, and the second protocol layer is a radio link control (RLC) layer.

9. The method of claim 1, further comprising:
discarding a duplicate data packet upon detecting that the data packet is the duplicate data packet.

10. A method for data transmission, comprising:
transmitting a data packet to a relay device for duplicate packet detection, to transmit the data packet through the relay device to second user equipment (UE) upon detecting that the data packet is a non-duplicate data packet, wherein
the duplicate packet detection performed by the relay device comprises the duplicate packet detection performed by the relay device on a packet data convergence protocol (PDCP) protocol data unit (PDU), and the PDCP PDU is obtained by unpacking the data packet by the relay device.

11. The method of claim 10, wherein before transmitting the data packet to the relay device for the duplicate packet detection, the method further comprises:
obtaining the data packet by processing an upper-layer data packet of a first UE at a protocol stack of the first UE.

12. The method of claim 10, wherein transmitting the data packet to the relay device comprises:
transmitting the data packet to the relay device via a PC5 interface.

13. A device for data transmission, comprising a storage apparatus configured to store program codes and a processor configured to invoke the program codes to perform the method of any of claims 1 to 9.

14. A device for data transmission, comprising a storage apparatus configured to store program codes and a processor configured to invoke the program codes to perform the method of any of claims 10 to 12.

15. An apparatus for data transmission, comprising:
a receiving module configured to receive a data packet;
an unpacking module configured to obtain a packet data convergence protocol (PDCP) protocol data unit (PDU) by unpacking the data packet;
a detection module configured to perform duplicate packet detection on the PDCP PDU; and
a transmitting module configured to transmit a non-duplicate data packet upon detecting that the data packet is the non-duplicate data packet.

16. An apparatus for data transmission, comprising:
a transmitting module configured to transmit a data packet to a relay device for duplicate packet detection, to transmit the data packet through the relay device to second user equipment (UE) upon detecting that the data packet is a non-duplicate data packet, wherein
the duplicate packet detection performed by the relay device comprises the duplicate packet detection performed by the relay device on a packet data convergence protocol (PDCP) protocol data unit (PDU), and the PDCP PDU is obtained by unpacking the data packet by the relay device.

17. A computer-readable storage medium storing computer programs which are operable with a computer to perform the method of any of claims 1 to 9.

18. A computer-readable storage medium storing computer programs which are operable with a computer to perform the method of any of claims 10 to 12.

19. A chip, configured to:
receive a data packet;
obtain a packet data convergence protocol (PDCP) protocol data unit (PDU) by unpacking the data packet;
perform duplicate packet detection on the PDCP PDU; and
output a non-duplicate data packet upon detecting that the data packet is the non-duplicate data packet.

20. A chip, configured to:
output a data packet to transmit the data packet to a relay device for duplicate packet detection, to transmit the data packet through the relay device to second user equipment (UE) upon detecting that the data packet is a non-duplicate data packet, wherein
the duplicate packet detection performed by the relay device comprises the duplicate packet detection performed by the relay device on a packet data convergence protocol (PDCP) protocol data unit (PDU), and the PDCP PDU is obtained by unpacking the data packet by the relay device.

21. A module device, comprising:
an input interface configured to receive a data packet;
a chip module configured to:
obtain a packet data convergence protocol (PDCP) protocol data unit (PDU) by unpacking the data packet; and
perform duplicate packet detection on the PDCP PDU; and
an output interface configured to output a non-duplicate data packet upon detecting that the data packet is the non-duplicate data packet.

22. A module device, comprising an output interface configured to:
output a data packet to transmit the data packet to a relay device for duplicate packet detection, to transmit the data packet through the relay device to second user equipment (UE) upon detecting that the data packet is a non-duplicate data packet, wherein
the duplicate packet detection performed by the relay device comprises the duplicate packet detection performed by the relay device on a packet data convergence protocol (PDCP) protocol data unit (PDU), and the PDCP PDU is obtained by unpacking the data packet by the relay device.
